# EUROPÄISCHE PATENTSCHRIFT

(11) **EP 1 273 534 B1**
(45) Veröffentlichungstag und Bekanntmachung des Hinweises auf die Patenterteilung: **22.10.2003**
(21) Anmeldenummer: 02012330.3
(22) Anmeldetag: 04.06.2002
(51) Int. Cl.: B65G 17/20

(54) **Hängefördervorrichtung, insbesondere für auf Haken hängendem Gut**
Overhead conveyor system device, in particular for objects suspended by hooks
Système de convoyeur aérien, notamment pour des objets pendus par crochets

(30) Priorität: 25.06.2001 DE 10130494
(43) Veröffentlichungstag der Anmeldung: 08.01.2003
(73) Patentinhaber: Gärtner, Franz, 97656 Oberelsbach (DE)
(72) Erfinder: Gärtner, Franz, 97656 Oberelsbach (DE)
(74) Vertreter: Patentanwälte Dr. Solf & Zapf

(56) Entgegenhaltungen:
- EP-A- 0 517 677
- GB-A- 2 264 277
- US-A- 2 980 258
- US-A- 3 265 011
- US-A- 3 727 745

## Beschreibung

Die Erfindung betrifft eine Hängefördervorrichtung, insbesondere für auf Haken hängendem Gut (GB 2 264 277 A).

Aus der DE 40 26 546 A1 ist eine Fördervorrichtung für auf Haken hängendem Gut, insbesondere Kleidungsstücke bekannt, bei dem die Kleidungsstücke entlang einer Schiene gefördert werden, auf denen die Haken ruhen. Die Haken werden hierbei mit einem Kettenförderer gefördert, wobei der Kettenförderer mit Förderfingern in die Laufbahn der Haken eingreift und diese mit den Fingern schiebt. Bei einer solchen Vorrichtung ist von Nachteil, daß diese einen hohen Platzbedarf hat und zudem von der Herstellung her sehr aufwendig und teuer ist.

Es ist ferner bekannt, insbesondere Kleidungsstücke hängend an sog. Trolleys zu transportieren, wobei diese Trolleys entlang einer Schiene verschoben werden, an der sie mit Rollen hängend gehalten werden.

Aufgabe der Erfindung ist es, eine Hängefördervorrichtung zu schaffen, welche einfach aufgebaut ist, leicht zu montieren und zu warten ist und welche problemlos auch über relativ enge Radien fördert.

Die Aufgabe wird mit einer Hängefördervorrichtung mit den Merkmalen des Anspruchs 1 gelöst.

Erfindungsgemäß werden an einer Transportkette, welche in einem entsprechenden Transportprofil geführt wird, zumindest ein Teil der Kettenbolzen derart ausgebildet, daß sie seitlich über die Kette vorstehen, wobei an dem vorstehenden Stück endseitig ein Öhr ausgebildet ist. Durch das Öhr ist ein sich über die gesamte Länge erstreckender, im Querschnitt im wesentlichen runder Kunststoffriemen durchgeführt, welcher vorteilhafterweise eine Stahldrahtseilseele aufweist. Die Hängefördervorrichtung kann dabei derart ausgebildet sein, daß die Kette auf den Kettenflanschen einer Seite im Förderprofil geführt wird, wobei die das Öhr aufweisenden Hakenstücke nach unten aus der Förderschiene herausragen.

Bei einer weiteren Ausführungsform wird die Kette vorteilhafterweise auf ihren Kettenwalzen rollend entlang der Förderschiene geführt, so daß die Hakenstücke seitlich aus der Förderschiene austreten. Die Hakenstücke können sich bis zu ihrem Öhr seitlich aus der Schiene herausstrecken oder nach dem Austritt aus der Schiene derart abgekröpft sein, daß die Öhren hintereinander entlang der Längserstreckung der Schiene unter dieser angeordnet sind.

Die Erfindung wird im folgenden anhand einer Zeichnung beispielhaft erläutert. Es zeigen dabei
- Fig. 1: eine erfindungsgemäß Hängefördervorrichtung mit nach unten aus der Förderschiene austretenden Hakenstücken;
- Fig. 2: eine Vorrichtung entsprechend Fig. 1 mit Ansicht auf eine Antriebseinrichtung und eine Bügelabnahmeeinrichtung;
- Fig. 3: eine weitere Ausführungsform einer erfindungsgemäßen Hängefördervorrichtung mit einer auf den Kettenwalzen laufenden Kette und seitlich aus der Förderschiene heraustretenden Hakenstücken;
- Fig. 4: eine Hängefördervorrichtung entsprechend Fig. 3 in einer teilgeschnittenen Ansicht mit einer Übergabevorrichtung;
- Fig. 5: eine Hängefördervorrichtung nach Fig. 3 mit einer Abnahmevorrichtung;
- Fig. 6: eine erfindungsgemäße Hängefördervorrichtung entsprechend Fig. 1 mit einem Abwärtsbogen;
- Fig. 7: eine Hängefördervorrichtung nach Fig. 6 mit einem Aufwärtsbogen.

Eine erfindungsgemäße Hängefördervorrichtung 1 besitzt eine Förderschiene 2, eine in der Förderschiene 2 angeordnete Kettenführung 3, eine Förderkette 4 sowie an der Förderkette 4 als Hakenstücke 5 ausgebildete Kettenbolzen 14 und einen in den Hakenstücken 5 geführten Kunststofftragriemen 6.

Die Förderschiene 2 ist als langgestrecktes Kunststoff- oder Metallhohlprofil ausgebildet, wobei die Förderschiene 2 außenseitig mit Nuten 7 zur Befestigung derselben an Tragkonstruktionen ausgebildet ist.

Der im Inneren des Hohlprofils ausgebildete Hohlraum 8 ist beispielsweise im Querschnitt flachrechteckig ausgebildet, wobei sich an zumindest einer Seite der Förderschiene 2 ein axialer Schlitz 9 befindet.

In dem Hohlraum 8 ist die Kettenführung 3 angeordnet. Die Kettenführung 3 ist ein langgestrecktes, im wesentlichen rechteckiges Kunststoff- oder Metallhohlprofil, vorzugsweise Kunststoffhohlprofil, welches eine Außenkontur aufweist, die der Innenkontur der Schiene 2 entspricht und eine Innenkontur aufweist, die zumindest dem maximalen Querschnitt einer Kette 4 entspricht.

Im Bereich des Schlitzes 9 weist die Kettenführung 3 ebenfalls einen korrespondierenden Schlitz 10 auf.

Im Bereich der Kettenwalzen bzw. -rollen 11 sind an der Kettenführung 3 in den Bereich der Kette 4 vorstehende, im Querschnitt rechteckige Stege 12 ausgebildet.

Die Kette 4 ist als an sich bekannte Seitenbogenkette ausgebildet, wobei die Kette 4 die bereits erwähnten Kettenwalzen 11 sowie die Kettenflansche 13 aufweist, wobei die Kettenflansche 13 mit Kettenbolzen 14, welche die Walzen 11 durchgreifen, zusammengehalten werden.

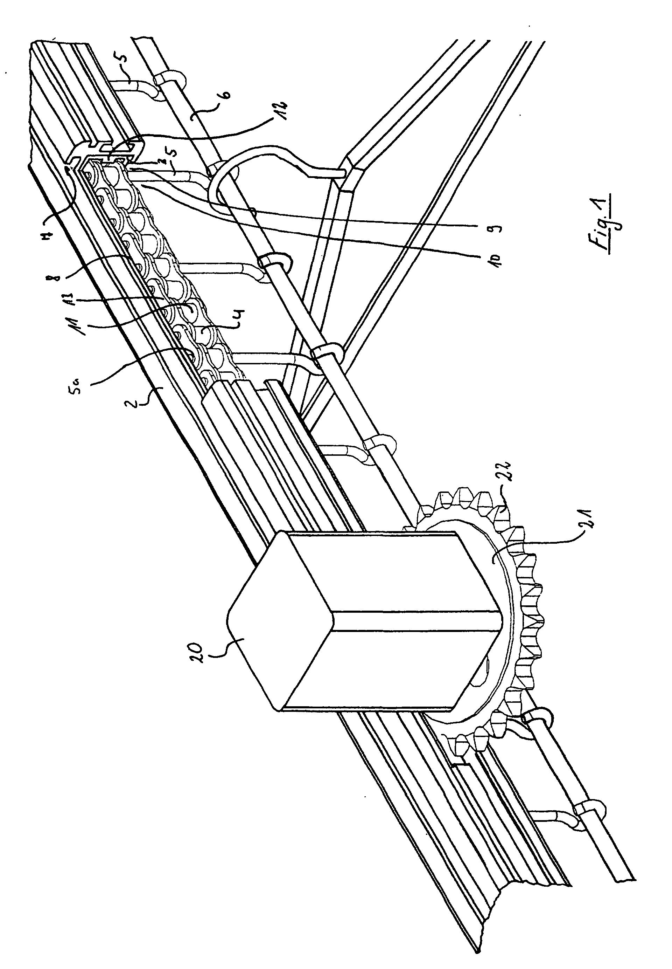

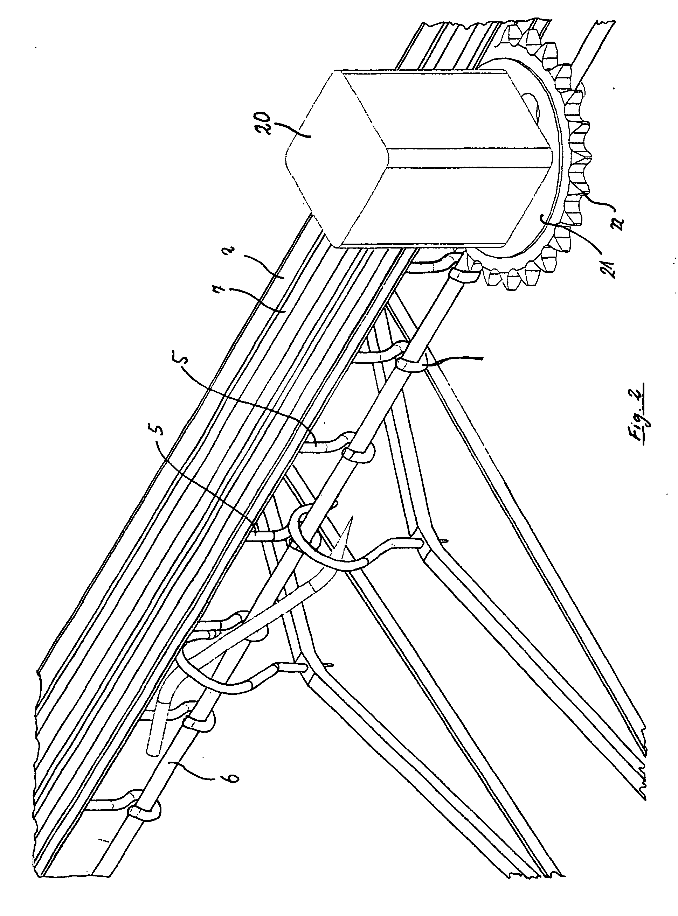

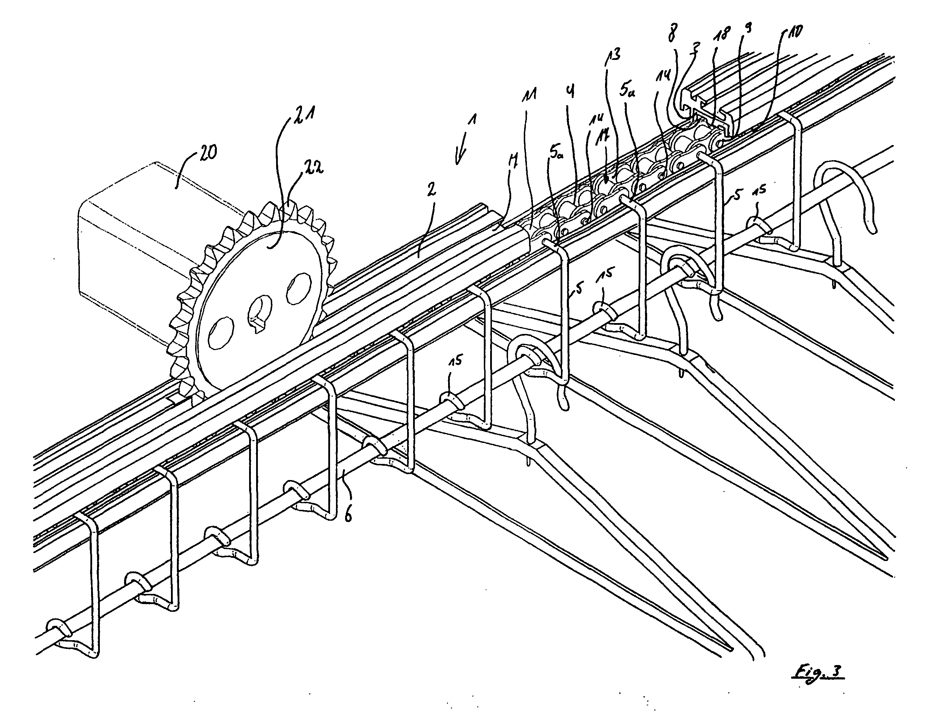

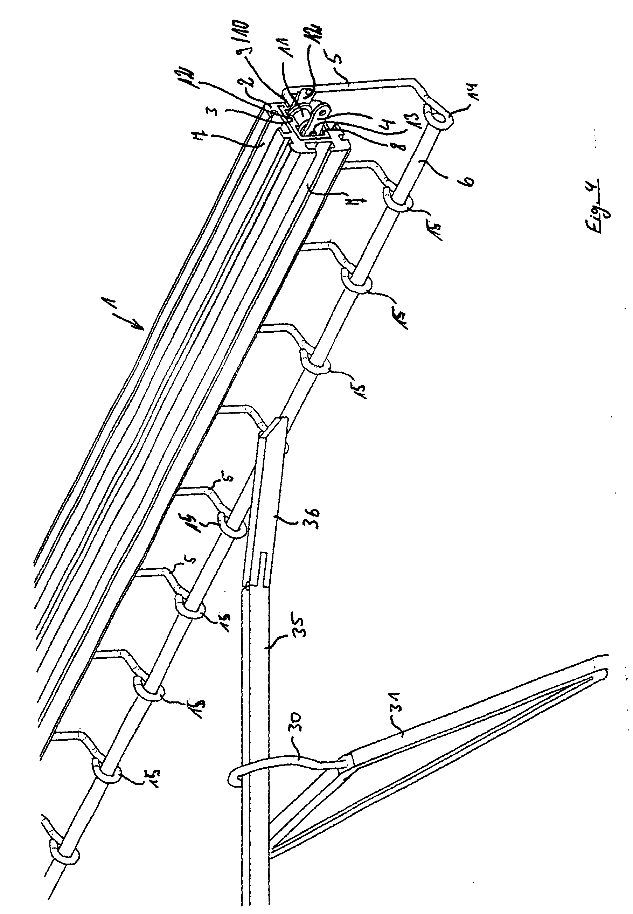

Die Kette 4 wird mit einem Kettenantrieb 20 angetrieben, wobei der Kettenantrieb 20 an einer vorgegebenen Stelle mit einem Zahnrad bzw. Ritzel 21 die Förderschiene 2 sowie die Kettenführung 3 durchgreift und mit den Zähnen 22 des Ritzels 21 zwischen die Kettenwalzen 11 der Kette 4 greifen kann. Der Kettenantrieb kann elektromotorisch, hydraulisch oder dergleichen betätigt oder angetrieben sein. Bei einer ersten Ausführungsform der Erfindung (Fig. 1, 2) wird die Kette 4 in der Kettenführung 3 derart geführt, daß die Kettenwalzen 11 stehend angeordnet sind. Die Schlitze 9, 10 sind demzufolge in der Unterseite der Förderschiene bzw. der Kettenführung angeordnet. Eine Anzahl von Kettenbolzen 14 sind durch Hakenstücke 5 ersetzt bzw. als Hakenstücke 5 verlängert ausgebildet, wobei die Hakenstücke 5 anstelle eines Kettenbolzens 14, vorzugsweise im gleichen Abstand je zueinander mit einem Ende 5a die Kette im Bereich einer Walze 11 durchgreifen, wobei die Hakenstücke 5 sich jeweils durch den Schlitz 9, 10 erstrecken und mit einem Öhr 15 endend ausgebildet sind. Durch die Öhre 15 ist der Tragriemen 6 geführt.

Die Schlitze 9, 10 weisen eine Weite auf, die etwas größer ist als der Durchmesser der Hakenstücke 5. Die Kette 4 läuft in der Kettenführung 3 bei dieser Ausführungsform derart, daß die Kettenflansche 13 einer Seite der Kette 4 beidseitig der Schlitze 9, 10 auf der Innenfläche der Kettenführung 3 aufliegen.

Der Tragriemen 6 ist aus Kunststoff ausgebildet und besitzt vorzugsweise eine Seele aus einem Seil, insbesondere einem Stahldrahtseil.

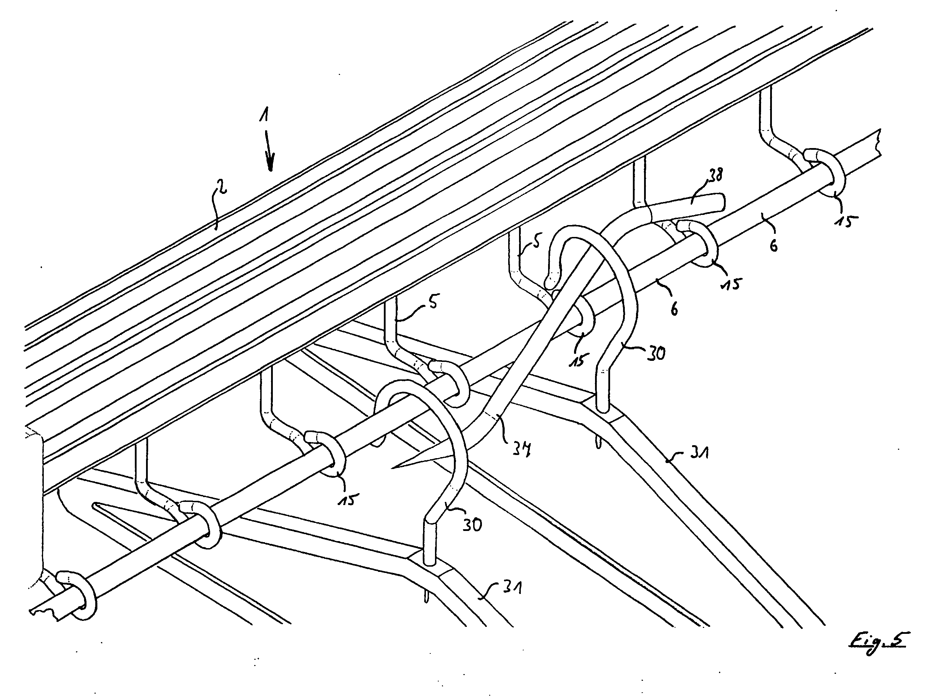

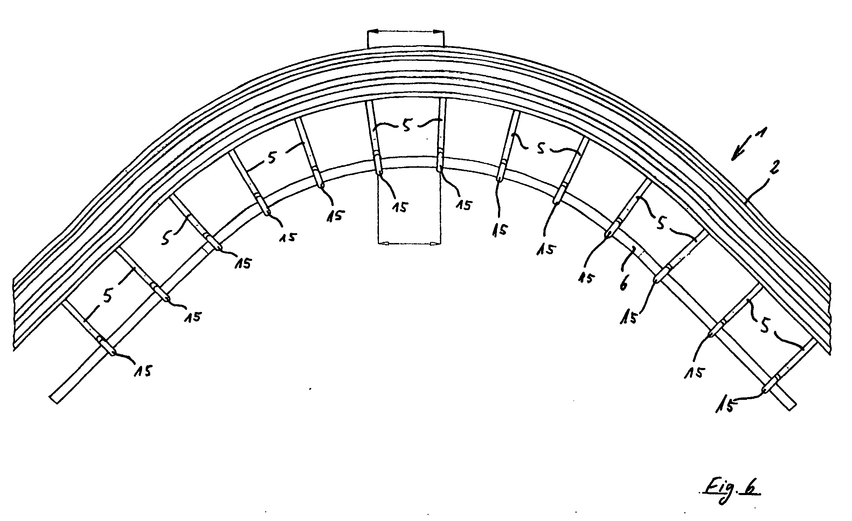

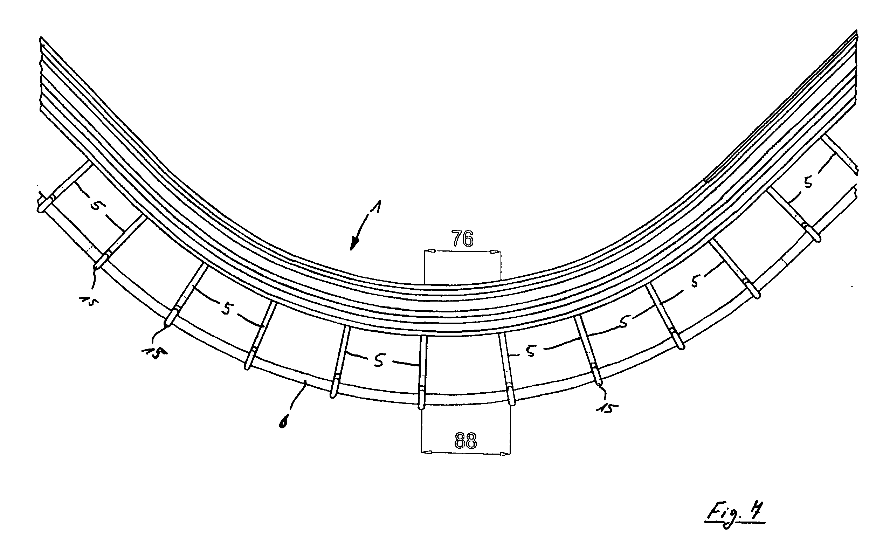

Bei einer weiteren Ausführungsform der Erfindung (Fig. 3, 4) sind die Förderschiene 2 und die Kettenführung 3 derart angeordnet, daß die Kette 4 liegend geführt wird, wobei die Kettenwalzen 11 auf einem Führungssteg 16 der Kettenführung 3 abrollen. Die zur Oberseite 17 der Kette 4 benachbarte Fläche 18 der Kettenführung 3 ist hierbei von der Kette 4 gering beabstandet, um das Abrollen der Kette 4 auf dem Steg 16 zu ermöglichen. Die Schlitze 9, 10 sind bei dieser Ausführungsform an einer Seite bzw. im Bereich einer Seite der Kettenführung 3 bzw. der Führungsschiene 2 angeordnet. Die Hakenstücke 5 erstrecken sich senkrecht zur Kettenlaufrichtung seitlich aus den Schlitzen 9, 10 heraus, wobei die Schlitze 9, 10 eine Weite aufweisen, die etwas größer ist als der Durchmesser der Hakenstücke 5. Benachbart zum Schlitz 10 und außerhalb der Schiene 2 sind die Hakenstücke 5 um 90° nach unten abgebogen ausgebildet. Die Hakenstücke 5 erstrecken sich dadurch um eine gegebene Strecke nach unten, um mit einer weiteren, gleich gerichteten Biegung um 90° mit den Öhren 15 in einem Bereich unterhalb der Kette 4 angeordnet zu sein. Hierdurch wird das Pendeln der Kette 4 bei der Aufgabe von Lasten auf den Riemen 6 verhindert bzw. vermindert.

Eine derartige Ausführungsform ist insbesondere bei schweren Lasten vorgesehen, da durch das Abrollen der Kette auf dem Steg 16 die Reibungskräfte gegenüber der ersten Ausführungsform vermindert sind.

Durch die Anordnung eines Tragriemens 6 in den Öhren 15 sowie die Verwendung von gleichartig ausgebildeten Hakenstücken 5 und die Ausbildung der Kette als Seitenbogenkette lassen sich in sehr einfacher material- und kostensparender Weise auch Radien (Fig. 6, 7) realisieren, so daß in einfacher Weise um Kurven oder bergauf und bergab gefördert werden kann. Die Öhren 15 sind dabei derart bemessen, daß sie auf der Oberfläche des Riemens 6 entlanggleiten können, so daß bei einem zum Riemen 6 gerichteten Radius (Fig. 6) sich die Öhren im Bereich der Biegung leicht annähern können oder bei einem entgegen dem Riemen 6 gerichteten Radius (Fig. 7) sich die Öhren leicht voneinander entfernen können.

Mit Haken 30 versehene Kleiderbügel 31 werden in dem Zwischenraum zwischen zwei Hakenstücken 5 auf dem Kunststoffriemen 6 transportiert, wobei sie jeweils in Transportrichtung am hinteren Hakenbügel 5 anliegen können.

Um Kleiderhaken 30 auf die Transportvorrichtung insbesondere den Kunststofftragriemen 6 aufzuschleusen, ist eine Schiene 35 vorhanden (Fig. 4), welche beispielsweise abwärts geneigt in Richtung auf den Kunststofftragriemen 6 verläuft, so daß die Haken 30 bzw. Kleiderhaken 31 auf den Kunststoffriemen 6 rutschen können. Insbesondere kann eine derartige Schiene 35 endseitig ein in die Laufbahn des Kunststofftragriemens 6 verschwenkbares freies Ende 36 aufweisen.

Um Kleiderhaken 31 mit Haken 30 von dem Kunststofftragriemen 6 abzuziehen, kann ein in die Laufbahn der Haken 30 auf dem Kunststofftragriemen 6 ragender, insbesondere ein schwenkbarer Abnahmefinger 37 vorhanden sein, mit welchem die Haken nach oben seitlich von dem Kunststofftragriemen 6 emporgehoben und abgezogen werden, wobei beim Abziehen die Haken 30 durch die Hakenstücke 5 solange vorwärts und den Finger 37 hinaufbewegt werden, bis sie vom Kunststofftragriemen 6 entnommen sind. Vorzugsweise auf dieser Höhe knickt der Abnahmefinger 37 mit einem abknickenden Verlauf 38 wieder herunter und von dem Kunststofftragriemen 6 weg.

## Patentansprüche

1. Hängefördervorrichtung, insbesondere für auf Haken hängendem Gut, aufweisend eine Förderkette (4), die in einer Kettenführung (3) geführt wird, wobei die Kette (4) eine Mehrzahl von Hakenstücken (5) aufweist, die an einer Seite der Kette (4) über die Kettenflansche (13) der Kette (4) seitlich hinausstehen, wobei die freien Enden der Hakenstücke (5) je ein Öhr (15) ausbilden, **dadurch gekennzeichnet, daß** zur Ausbildung einer durchgehenden Tragkonstruktion für das zu transportierende Gut ein Tragriemen (6) die Öhre (15) der Hakenstücke (5) der Kette (4) durchsetzt, so daß auf Haken hängendes Gut mit dem Haken auf dem Tragriemen (6) aufliegend und an den Hakenstücken (5) anliegend gefördert werden kann.

2. Vorrichtung nach Anspruch 1,
**dadurch gekennzeichnet,**
**daß** die Kettenführung (3) in einer Förderschiene (2) angeordnet ist, wobei die Förderschiene (2) als langgestrecktes Kunststoff- oder Metallhohlprofil ausgebildet ist und die Förderschiene (2) außenseitig Nuten (7) zur Befestigung der Förderschiene (2) an Tragkonstruktionen aufweist.

3. Vorrichtung nach einem der vorhergehenden Ansprüche,
**dadurch gekennzeichnet,**
**daß** im Innern der als Hohlprofil ausgebildeten Förderschiene (2) ein Hohlraum (8) ausgebildet ist, wobei sich an zumindest einer Seite der Förderschiene (2) ein axialer Schlitz (9) befindet.

4. Vorrichtung nach einem der vorhergehenden Ansprüche,
**dadurch gekennzeichnet,**
**daß** im Hohlraum (8) die Kettenführung (3) angeordnet ist, wobei die Kettenführung (3) ein langgestrecktes, im wesentlichen rechteckiges Kunststoff- oder Metallhohlprofil ist, vorzugsweise Kunststoffhohlprofil, welches eine Außenkontur aufweist, die der Innenkontur der Schiene (2) im wesentlichen entspricht und eine Innenkontur aufweist, die zumindest dem maximalen Querschnitt einer Kette (4) entspricht.

5. Vorrichtung nach einem der vorhergehenden Ansprüche,
**dadurch gekennzeichnet,**
**daß** im Bereich des Schlitzes (9) die Kettenführung (3) einen korrespondierenden fluchtenden Schlitz (10) aufweist, wobei im Bereich der Kettenwalzen bzw. Rollen (11) an der Kettenführung (3) in den Bereich der Kette (4) vorstehende, im Querschnitt rechteckige Stege (12) zum Aufrollen der Kettenbolzen hierauf ausgebildet sind.

6. Vorrichtung nach einem der vorhergehenden Ansprüche,
**dadurch gekennzeichnet,**
**daß** die Kette (4) als Seitenbogenkette ausgebildet ist.

7. Vorrichtung nach einem der vorhergehenden Ansprüche,
**dadurch gekennzeichnet,**
**daß** die Kette (4) Kettenwalzen (11), Kettenflansche (13) sowie die Kettenwalzen und die Kettenflansche verbindende Kettenbolzen (14), welche die Walzen (11) durchgreifen, aufweist.

8. Vorrichtung nach einem der vorhergehenden Ansprüche,
**dadurch gekennzeichnet,**
**daß** ein Kettenantrieb (20) vorhanden ist, wobei der Kettenantrieb (20) an einer vorgegebenen Stelle mit einem Zahnrad bzw. Ritzel (21) die Förderschiene (2) sowie die Kettenführung (3) teilbereichsweise durchgreift und mit den Zähnen (22) des Ritzels (21) zwischen die Kettenwalzen (11) der Kette (4) greifbar angeordnet ist.

9. Vorrichtung nach einem der vorhergehenden Ansprüche,
**dadurch gekennzeichnet,**
**daß** der Kettenantrieb elektromotorisch, hydraulisch oder dergleichen betätigt oder angetrieben ist.

10. Vorrichtung nach einem der vorhergehenden Ansprüche,
**dadurch gekennzeichnet,**
**daß** die Schlitze (9, 10) eine Weite aufweisen, die etwas größer ist als der Durchmesser der Hakenstücke (5).

11. Vorrichtung nach einem der vorhergehenden Ansprüche,
**dadurch gekennzeichnet,**
**daß** der Tragriemen (6) aus Kunststoff ausgebildet ist und eine Seele aus einem Seil, insbesondere einem Stahldrahtseil aufweist.

12. Vorrichtung nach einem der vorhergehenden Ansprüche,
**dadurch gekennzeichnet,**
**daß** die Kette (4) in der Kettenführung (3) derart angeordnet ist, daß die Kettenwalzen (11) stehend angeordnet sind und die Schlitze (9, 10) sich auf der jeweiligen Unterseite der Kettenführung (3) bzw. Schiene (2) befinden, wobei eine Anzahl von Kettenbolzen (14) durch Hakenstücke (5) ersetzt ist, wobei die Hakenstücke (5) vorzugsweise im gleichen Abstand zueinander mit einem Ende (5a) die Kette im Bereich einer Walze (11) an Stelle eines Kettenbolzens (14) durchgreifen, wobei sich die Hakenstücke (5) jeweils durch den Schlitz (9, 10) erstrecken und mit dem Öhr (15) endend ausgebildet sind.

13. Vorrichtung nach einem der vorhergehenden Ansprüche,
**dadurch gekennzeichnet,**
**daß** die Kette (4) in der Kettenführung (3) derart angeordnet ist, daß die Kettenflansche (13) einer Seite der Kette (4) beidseitig der Schlitze (9, 10) auf der Innenfläche der Kettenführung (3) aufliegen.

14. Vorrichtung nach einem der Ansprüche 1 bis 11,
**dadurch gekennzeichnet,**
**daß** die Förderschiene (2) und die Kettenführung (3) derart angeordnet sind, daß die Kette (4) liegend geführt wird, wobei die Kettenwalzen (11) auf einem Führungssteg (16) der Kettenführung (3) abrollen, wobei die Schlitze (9, 10) an einer Seite bzw. im Bereich einer Seite der Kettenführung bzw. der Führungsschiene angeordnet sind, wobei die Hakenstücke (5) sich senkrecht zur Kettenlaufrichtung seitlich aus den Schlitzen (9, 10) heraus erstrecken, wobei benachbart zum Schlitz (10) und außerhalb der Schiene (2) die Hakenstücke (5) um 90° nach unten abgebogen ausgebildet sind und die Hakenstücke sich um eine gegebene Strecke nach unten erstrecken, wo sie mit einer weiteren gleichgerichteten Biegung um 90° mit den Öhren (15) in einem Bereich unterhalb der Kette (4) angeordnet sind.

## Claims

1. Arrangement for suspended conveying, particularly for items suspended from hooks, having a conveyor chain (4) which is guided in a chain guide (3), wherein the chain (4) has a plurality of hooked members (5) which project laterally from the link plates (13) of the chain (4) on one side of the chain (4), wherein the free ends of the hooked members (5) each form an eye (15), **characterised in that**, to form a continuous supporting structure for the items to be transported, a supporting belt (6) passes through the eyes (15) of the hooked members (5) of the chain (4), thus enabling items suspended from hooks to be conveyed with the hook resting on the supporting belt (6) and resting against the hooked members (5).

2. Arrangement according to claim 1, **characterised in that** the chain guide (3) is arranged in a conveyor rail (2), the conveyor rail (2) being in the form of an elongated hollow profile of plastics material or metal and the conveyor rail (2) having on the outside grooves (7) to allow the conveyor rail (2) to be fastened to supporting structures.

3. Arrangement according to either of the foregoing claims, **characterised in that** there is formed in the interior of the conveyor rail (2), which conveyor rail (2) is in the form of a hollow profile, a cavity (8), an axial slot (9) being situated in at least one side of the conveyor rail (2).

4. Arrangement according to one of the foregoing claims, **characterised in that** the chain guide (3) is arranged in the cavity (8), the chain guide (3) being an elongated, substantially rectangular hollow profile of plastics material or metal, and preferably a hollow profile of plastics material, which has an outside contour which substantially matches the inside contour of the rail (2), and which has an inside contour which at least matches the maximum cross-section of a chain (4).

5. Arrangement according to one of the foregoing claims, **characterised in that**, in the region of the slot (9), the chain guide (3) has a corresponding slot (10) which is in alignment, there being formed on the chain guide (3), in the region of the chain rollers or sleeves (11), ridges (12) of rectangular cross-section which project into the region of the chain (4), for the chain pins to roll thereon.

6. Arrangement according to one of the foregoing claims, **characterised in that** the chain (4) is in the form of a sidebow chain.

7. Arrangement according to one of the foregoing claims, **characterised in that** the chain (4) has chain rollers (11), -chain link plates (13) and chain pins which pass through the rollers (11) and connect the chain rollers and the chain link plates together.

8. Arrangement according to one of the foregoing claims, **characterised in that** a chain drive (20) is provided, the chain drive (20) having a gear or pinion (21) which passes through the conveyor rail (2) and the chain guide (3) in a partial region thereof, and being arranged for the teeth (22) of the pinion (21) to be engageable between the chain rollers (11) of the chain (4).

9. Arrangement according to one of the foregoing claims, **characterised in that** the chain drive is actuated or driven by electric motor, hydraulically, or the like.

10. Arrangement according to one of the foregoing claims, **characterised in that** the width of the slots (9, 10) is slightly greater than the diameter of the hooked members (5)

11. Arrangement according to one of the foregoing claims, **characterised in that** the supporting belt (6) is formed from plastics material and has a core formed by a cable and in particular a cable of steel wire.

12. Arrangement according to one of the foregoing claims, **characterised in that** the chain (4) is so arranged in the chain guide (3) that the chain rollers (11) are arranged to be vertical and the slots (9, 10) are situated in whatever is the underside of the chain guide (3) and rail (2) in the given case, a number of chain pins (14) being replaced by hooked members (5), the hooked members (5) passing, at one end (5a), through the chain in the region of a roller (11) in place of a chain pin (14), preferably at equal intervals from one another, the hooked members (5) each extending through the slot (9, 10) and being formed to end. in the eye (15).

13. Arrangement according to one of the foregoing claims, **characterised in that** the chain (4) is so arranged in the chain guide (3) that the chain link plates (13) on one side of the chain (4) rest on the inside face of the chain guide (3) on both sides of the slots (9, 10).

14. Arrangement according to one of claims 1 to 11, **characterised in that** the conveyor rail (2) and the chain guide (3) are so arranged that the chain (4) is guided in a horizontal position, the chain rollers (11) rolling on a guide ridge (16) in the chain guide (3), the slots (9, 10) being arranged on one side or in the region of one side of the chain guide or the guide rail, with the hooked members (5) extending laterally from the slots perpendicularly to the direction of movement of the chain, the hooked members (5) being bent downwards at 90° adjacent the slot (10) and clear of the rail (2), and the hooked members extending downwards for a given distance, at which point they have a further 90° bend made in the same direction, by which their eyes (15) are arranged in a region below the chain (4).

## Revendications

1. Dispositif de manutention suspendu, en particulier pour des produits suspendus à des crochets, présentant une chaîne de transport (4) qui est guidée dans un guidage de chaîne (3), la chaîne (4) présentant une pluralité de pièces en crochet (5) qui dépassent latéralement sur un côté de la chaîne (4) au-delà des joues (13) de la chaîne (4), l'extrémité libre de chacune des pièces en crochet (5) formant un oeillet (15), **caractérisé en ce que**, pour former une charpente support continue pour les produits à transporter, une courroie porteuse (6) traverse les oeillets (15) des pièces en crochet (5) de la chaîne (4), de façon que des produits suspendus à des crochets puissent être transportés avec le crochet reposant sur la courroie porteuse (6) et adjacent aux pièces en crochet (5).

2. Dispositif selon la revendication 1, **caractérisé en ce que** le guidage de chaîne (3) est disposé dans un rail de transport (2) qui est conçu comme un profilé creux allongé en matière plastique ou en métal et qui présente du côté extérieur des rainures (7) pour fixer ledit rail de transport (2) à des charpentes support.

3. Dispositif selon l'une des revendications précédentes, **caractérisé en ce qu'**un espace creux (8) est formé à l'intérieur du rail de transport (2) formé comme un profilé creux, une fente axiale (9) se trouvant sur au moins un côté du rail de transport (2).

4. Dispositif selon l'une des revendications précédentes, **caractérisé en ce que** le guidage de chaîne (3) est disposé dans l'espace creux (8), ledit guidage de chaîne (3) étant un profilé creux allongé en matière plastique ou en métal essentiellement rectangulaire, de préférence un profilé creux en matière plastique, qui présente un contour extérieur correspondant essentiellement au contour intérieur du rail (2) et un contour intérieur correspondant au moins à la section maximale d'une chaîne (4).

5. Dispositif selon l'une des revendications précédentes, **caractérisé en ce que**, dans la zone de la fente (9), le guidage de chaîne (3) présente une fente (10) alignée de manière correspondante, des nervures (12) de section rectangulaire, dépassant dans la zone des cylindres ou rouleaux de chaîne (11), étant prévues sur le guidage de chaîne (3) dans la zone de la chaîne (4) pour faire rouler dessus les axes de chaîne.

6. Dispositif selon l'une des revendications précédentes, **caractérisé en ce que** la chaîne (4) est formée comme une chaîne en courbe latérale.

7. Dispositif selon l'une des revendications précédentes, **caractérisé en ce que** la chaîne (4) présente des rouleaux de chaîne (11), des joues de chaîne (13), ainsi que des axes de chaîne (14) reliant les joues de chaîne et traversant les rouleaux (11).

8. Dispositif selon l'une des revendications précédentes, **caractérisé en ce qu'**il est prévu un entraînement de chaîne (20) qui pénètre partiellement en un point prédéfini dans le rail de transport (2), ainsi que dans le guidage de chaîne (3), avec une roue dentée ou un pignon (21) et qui est disposé de manière à ce que les dents (22) du pignon (21) puissent s'engager entre les rouleaux (11) de la chaîne (4).

9. Dispositif selon l'une des revendications précédentes, **caractérisé en ce que** l'entraînement de chaîne est actionné ou entraîné par un moteur électrique, de manière hydraulique ou similaire.

10. Dispositif selon l'une des revendications précédentes, **caractérisé en ce que** les fentes (9, 10) présentent une largeur un peu supérieure au diamètre des pièces en crochet (5).

11. Dispositif selon l'une des revendications précédentes, **caractérisé en ce que** la courroie porteuse (6) est réalisée en matière plastique et présente une âme constituée d'un câble, en particulier un câble en acier.

12. Dispositif selon l'une des revendications précédentes, **caractérisé en ce que** la chaîne (4) est disposée dans le guidage de chaîne (3) de façon que les rouleaux de chaîne (11) soient disposés verticalement et que les fentes (9, 10) se trouvent sur la face inférieure du guidage de chaîne (3) ou du rail (2), un nombre d'axes de chaîne (14) étant remplacés par des pièces en crochet (5), lesdites pièces en crochet (5) situées de préférence à distance égale les unes des autres traversant la chaîne avec une extrémité (5a) dans la zone d'un rouleau (11) à la place d'un axe de chaîne (14), les pièces en crochet (5) s'étendant à travers la fente (9, 10) et étant formées en se terminant par l'oeillet (15).

13. Dispositif selon l'une des revendications précédentes, **caractérisé en ce que** la chaîne (4) est disposée dans le guidage de chaîne (3) de façon que les joues (13) d'une face de la chaîne (4) reposent des deux côtés des fentes (9, 10) sur la face intérieure du guidage de chaîne (3).

14. Dispositif selon l'une des revendications 1 à 11, **caractérisé en ce que** le rail de transport (2) et le guidage de chaîne (3) sont disposés de façon que la chaîne (4) soit guidée horizontalement, les rouleaux de chaîne (11) roulant sur une nervure de guidage (16) du guidage de chaîne (3), les fentes (9, 10) étant disposées sur un côté ou dans la zone d'un côté du guidage de chaîne ou du rail de guidage, les pièces en crochet (5) s'étendant latéralement hors des fentes (9, 10) perpendiculairement à la direction d'avance de la chaîne, les pièces en crochet (5) étant formées au voisinage de la fente (10) et à l'extérieur du rail (2) pliées de 90° vers le bas et les pièces en crochet s'étendant d'une distance donnée vers le bas où elles sont disposées avec un autre pliage de 90° dans le même sens avec les oeillets (15) dans une zone située au-dessous de la chaîne (4).
